# FASCICULE DE BREVET EUROPEEN

(11) **EP 4 180 675 B1**
(45) Date de publication et mention de la délivrance du brevet: **15.05.2024**
(21) Numéro de dépôt: 22193928.3
(22) Date de dépôt: 05.09.2022
(51) Int. Cl.: F16B 5/06, F16B 19/10, F16B 21/10, F16B 37/14

(54) **DISPOSITIF DE SERRAGE**
SPANNVORRICHTUNG
TIGHTENING DEVICE

(30) Priorité: 12.11.2021 FR 2111994
(43) Date de publication de la demande: 17.05.2023
(73) Titulaire: Norelem SAS, 10280 Fontaine les Grès (FR)
(72) Inventeur: LE MEUR, Olivier, 10410 SAINT PARRES AUX TERTRES (FR)
(74) Mandataire: Loyer & Abello

(56) Documents cités:
- WO-A1-2019/158590
- US-A1- 2005 084 361
- US-A1- 2009 252 570
- US-A1- 2018 051 736

## Description

### Domaine technique

L'invention se rapporte au domaine des dispositifs de serrage destinés à serrer une première pièce contre une deuxième pièce, les première et deuxième pièces présentant chacune un orifice.

### Arrière-plan technologique

Il est connu du document WO2019158590 un dispositif de serrage permettant de serrer les unes contre les autres deux ou plusieurs pièces empilées présentant chacune un orifice.

Le dispositif de serrage comporte un manchon adapté pour être inséré dans les orifices des pièces. Le dispositif comporte une unité d'actionnement et une tige actionnée par l'unité d'actionnement. Le dispositif de serrage comporte également un élément d'ancrage interagissant avec l'actionneur. Dans ce document, l'élément d'ancrage comporte deux cylindres coupés obliquement, le cylindre inférieur étant fixé à la tige.

L'unité d'actionnement peut notamment être un écrou lié avec la tige par vissage. Ainsi, l'actionnement de l'unité d'actionnement permet de remonter la tige faisant remonter le cylindre inférieur. Le cylindre inférieur exerce alors un effort sur le cylindre supérieur ce qui tend à déplacer radialement le cylindre supérieur.

Toutefois, un tel dispositif n'est pas satisfaisant. En effet, en vissant l'unité d'actionnement, l'écrou est amené à frotter contre la pièce à serrer rendant difficile l'application d'un effort de serrage important.

Le document US 2018/051736 A1 montre un autre dispositif de serrage.

### Résumé

Une idée à la base de l'invention est d'améliorer l'application d'un effort de serrage avec un dispositif de serrage à vis.

Selon un mode de réalisation, l'invention fournit un dispositif de serrage destiné à serrer une première pièce et une deuxième pièce l'une contre l'autre, chacune des première et deuxième pièces présentant respectivement un premier orifice et un deuxième orifice, le dispositif étant destiné à être inséré dans le premier et le deuxième orifices, le dispositif de serrage comprenant :
- une vis filetée s'étendant selon un axe de rotation X et comportant une tige filetée destinée à traverser le premier orifice et une tête de vis formée à une première extrémité de la tige filetée, la tête de vis ayant une première surface d'appui inclinée et étant destinée à être logée dans le deuxième orifice,
- un élément d'actionnement comportant un trou taraudé dans lequel est vissé une deuxième extrémité de la tige filetée,
- un manchon emmanché et monté libre en rotation autour de la vis filetée entre la tête de vis et l'élément d'actionnement, le manchon comportant un corps cylindrique et une collerette s'étendant radialement depuis le corps cylindrique et destinée à reposer contre des bords du premier orifice, le corps cylindrique comportant une deuxième surface d'appui inclinée,
- au moins un élément de serrage disposé autour de la vis filetée entre la première surface d'appui inclinée et la deuxième surface d'appui inclinée, l'au moins un élément de serrage étant configuré pour se déplacer radialement en s'éloignant de la tige filetée lors du rapprochement de la première surface d'appui inclinée vers la deuxième surface d'appui inclinée, et
- un palier à roulement engagé autour de la vis et comportant des corps roulants interposés entre la collerette et l'élément d'actionnement.

Grâce à ces caractéristiques, le palier à roulement permet, lors du vissage de l'élément d'actionnement, d'éviter à l'élément d'actionnement de venir frotter contre la pièce à serrer ou même contre le manchon de sorte qu'à même couple de serrage exercé sur l'élément d'actionnement la force de serrage exercée par l'élément de serrage contre les bords de du deuxième orifice est plus importante. De plus, un tel palier à roulement permet d'éviter que l'unité d'actionnement entraine en rotation le manchon lors de l'application du couple de serrage.

Selon des modes de réalisation, un tel dispositif de serrage peut comporter une ou plusieurs des caractéristiques suivantes.

Selon un mode de réalisation, les corps roulants sont des aiguilles ayant un axe de révolution s'étendant dans une direction radiale.

Selon un mode de réalisation, la collerette est réalisée à une première extrémité du corps cylindrique et le corps cylindrique comporte une deuxième extrémité, la deuxième extrémité étant pourvue de la deuxième surface d'appui inclinée.

Selon un mode de réalisation, l'élément de serrage présente une section radiale trapézoïdale comportant une petite base située en vis à vis de la tige filetée, une grande base, un premier côté et un deuxième côté, le premier côté et le deuxième côté reliant la grande base à la petite base, le premier côté étant en vis-à-vis de la première surface d'appui inclinée et le deuxième côté étant en vis-vis de la deuxième surface d'appui inclinée.

Selon un mode de réalisation, la première surface d'appui inclinée et la deuxième surface d'appui inclinée présentent une forme tronconique de révolution autour de l'axe de rotation X et présentent respectivement un premier demi-angle au sommet et un deuxième demi-angle au sommet, le premier demi-angle au sommet et le deuxième demi-angle au sommet étant chacun compris entre 30 et 60°.

Selon un mode de réalisation, le premier demi-angle au sommet et le deuxième demi-angle au sommet sont chacun égal à 45°.

Ainsi, les efforts exercés par l'élément de serrage présentent deux composantes, l'une radiale permettant d'exercer un effort de serrage contre les bords de l'orifice de la deuxième pièce, l'autre axiale venant plaquer le dispositif de serrage contre la première pièce.

Selon un mode de réalisation, le premier côté présente une forme tronconique de révolution autour de l'axe de rotation X qui présente un demi-angle au sommet égal au premier demi-angle au sommet de la première surface d'appui inclinée.

Selon un mode de réalisation, le deuxième côté présente une forme tronconique de révolution autour de l'axe de rotation X qui présente un demi-angle au sommet égal au deuxième demi-angle au sommet de la deuxième surface d'appui inclinée.

Selon un mode de réalisation, le premier demi-angle au sommet est égal au deuxième demi-angle au sommet.

Selon un mode de réalisation, l'au moins un élément de serrage est réalisé dans un matériau métallique.

Selon un mode de réalisation, l'au moins un élément de serrage est réalisé en acier trempé ou en acier inoxydable.

Selon un mode de réalisation, le dispositif de serrage comporte au moins deux éléments de serrage, répartis dans un plan normal à l'axe de rotation et disposées autour de la vis filetée.

Selon un mode de réalisation, le dispositif de serrage comporte trois éléments de serrage, répartis dans un plan normal à l'axe de rotation et disposées autour de la vis filetée.

Selon un mode de réalisation, chaque élément de serrage présente une section angulaire égale à 120° de sorte que l'assemblage des trois éléments de serrage forme un anneau.

Selon un mode de réalisation, les éléments de serrage sont raccordés les uns aux autres à l'aide d'une bague élastique disposée autour desdits éléments de serrage, la bague élastique exerçant un effort de rappel radial orienté en direction de la tige filetée sur les éléments de serrage.

Selon un mode de réalisation, la bague extensible est réalisée dans un matériau élastomère, tel que le caoutchouc.

Selon un mode de réalisation, le palier à roulement comporte une bague supérieure située contre l'élément d'actionnement et une bague inférieure reposant contre la collerette, les corps roulants étant interposés entre la bague supérieure et la bague inférieure.

Selon un mode de réalisation, l'invention fournit aussi un ensemble de serrage comportant une première pièce, une deuxième pièce présentant respectivement un premier orifice et un deuxième orifice et un dispositif de serrage précité, le dispositif de serrage étant inséré dans le premier orifice et le deuxième orifice et étant configuré pour serrer la première pièce et la deuxième pièce l'une contre l'autre, la tige filetée traversant le premier orifice, la tête de vis et l'au moins un élément de serrage étant logés dans le deuxième orifice.

Selon un mode de réalisation, la deuxième pièce est une table de travail.

Selon un mode de réalisation, l'invention fournit aussi un procédé de serrage d'une première pièce munie d'un premier orifice, dans lequel le procédé comprend les étapes suivantes :
- fournir une deuxième pièce munie d'un deuxième orifice et un dispositif de serrage précité,
- disposer la première pièce sur la deuxième pièce de sorte que le premier orifice et le deuxième orifice soit alignée,
- insérer le dispositif de serrage dans le premier orifice et dans le deuxième orifice de sorte que la collerette repose contre des bords du premier orifice et que la tête de vis et l'au moins un élément de serrage soient situés dans le deuxième orifice,
- actionner l'élément d'actionnement de sorte à rapprocher la première surface d'appui inclinée vers la deuxième surface d'appui inclinée provoquant le déplacement radial de l'élément de serrage contre des parois du deuxième orifice.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig. 1] La figure 1 représente une vue en coupe de deux pièces munies d'orifices dans lesquels est logé un dispositif de serrage selon un mode de réalisation, la coupe ayant été réalisée selon un diamètre des orifices
[Fig. 2] La figure 2 est une vue en coupe d'un dispositif de serrage selon un mode de réalisation.
[Fig. 3] La figure 3 est une vue en perspective des éléments de serrage d'un dispositif de serrage selon un mode de réalisation.
[Fig. 4] La figure 4 est une vue éclatée d'un palier à roulement comportant des aiguilles.

### Description des modes de réalisation

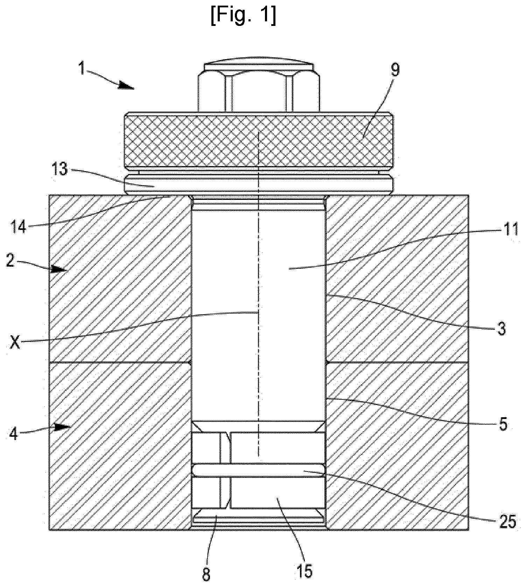

Il va être décrit par la suite en référence aux figures 1 à 5, un dispositif de serrage 1 permettant de serrer une première pièce 2 munie d'un premier orifice 3 contre une deuxième pièce 4 munie d'un deuxième orifice 5.

La figure 1 représente un dispositif de serrage 1 selon un mode de réalisation qui est logé dans le premier orifice 3 et le deuxième orifice 5. Pour cela, les orifices 3, 5 sont coaxiaux. Les orifices 3, 5 peuvent présenter des diamètres différents, le diamètre du deuxième orifice 5 étant de préférence inférieur ou égal au diamètre du premier orifice 3. La deuxième pièce 4 peut être par exemple une table de travail servant de support à des pièces à travailler.

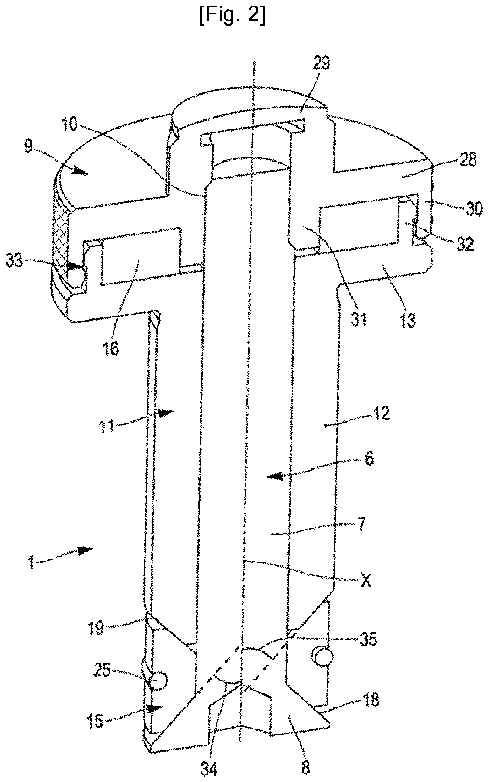

La figure 2 représente une coupe du dispositif de serrage 1 selon un mode de réalisation permettant de visualiser les différents éléments composant le dispositif de serrage 1.

Le dispositif de serrage 1 comporte ainsi :
- une vis filetée 6 s'étendant selon un axe de rotation X qui est coaxial avec les axes des orifices 3, 5, et comportant une tige filetée 7 traversant le premier orifice 3 et une tête de vis 8 formée à une première extrémité de la tige filetée 7 et étant logée dans le deuxième orifice 4,
- un élément d'actionnement 9 comportant un trou taraudé 10 dans lequel est vissé une deuxième extrémité de la tige filetée 7,
- un manchon 11 emmanché entre la tête de vis 8 et l'élément d'actionnement 9 et monté libre en rotation autour de la vis filetée 7, le manchon 11 comportant un corps cylindrique 12 et une collerette 13 s'étendant radialement depuis le corps cylindrique 12, la collerette 13 étant destinée à reposer contre les bords 14 du premier orifice 3, comme visible sur la figure 1,
- une pluralité d'éléments de serrage 15 disposés autour de la vis filetée 7 entre la tête de vis 8 et le manchon 11,
- un palier à roulement 16 engagé autour de la vis 6 et comportant des corps roulants 17 interposés entre la collerette 13 et l'élément d'actionnement 9.

La rotation de l'élément d'actionnement 9 autour de l'axe X permet de déplacer la vis filetée 7 axialement le long de l'axe X de sorte à rapprocher la tête de vis 8 du manchon 11 lors du serrage ou à éloigner la tête de vis 8 du manchon 11 lors du desserrage.

Comme visible en figure 2, dans ce mode de réalisation, la tête de vis 8 présente une première surface d'appui 18 disposée en regard des éléments de serrage 15 qui présente une forme tronconique de révolution autour de l'axe de rotation X ayant un demi-angle 34 au sommet égal à 45°.

De manière analogue, le corps cylindrique 12 présente une deuxième surface d'appui 19 disposée en regard des éléments de serrage 15 qui présente une forme tronconique de révolution autour de l'axe de rotation X ayant un demi-angle 35 au sommet égal à 45°.

Dans d'autres modes de réalisations non représentés, les surfaces d'appui 18, 19 peuvent présenter un demi-angle au somment différent de 45° et de manière avantageuse compris entre 30 et 60°.

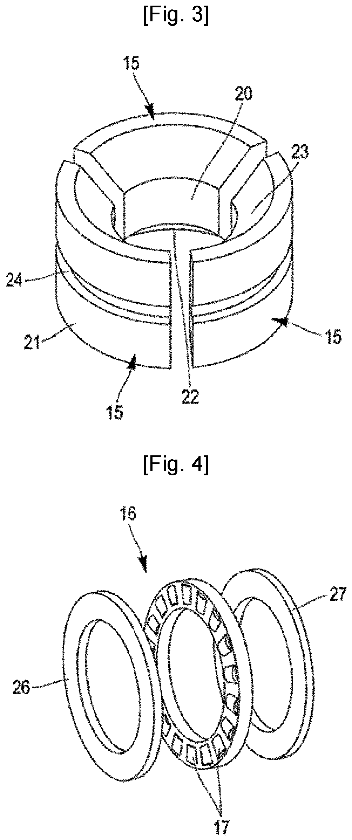

Comme représenté notamment en figures 2 et 3, chaque élément de serrage 15 présente une section radiale globalement trapézoïdale comportant une petite base 20 située en vis à vis de la tige filetée 7, une grande base 21, un premier côté 22 et un deuxième côté 23. Le premier côté 22 et le deuxième côté 23 relient la grande base 21 à la petite base 20, le premier côté 22 étant en vis-à-vis de la première surface d'appui inclinée 18 et le deuxième côté 23 étant en vis-vis de la deuxième surface d'appui inclinée 19.

Les éléments de serrage 15 sont configurés pour se déplacer radialement en s'éloignant de la tige filetée 7 lors du rapprochement la tête de vis 8 vers le manchon 11. En effet, du fait de l'inclinaison des surfaces d'appui 18 et 19, les éléments de serrage 15 sont poussés radialement vers l'extérieur lors du serrage.

Dans l'exemple représenté, les éléments de serrage 15 sont au nombre de trois et sont répartis tout autour de la vis filetée 6 de sorte à former un anneau de serrage.

De manière avantageuse et comme visible sur la figure 2, le premier côté 22 présente une forme tronconique de révolution autour de l'axe de rotation X qui présente un demi-angle au sommet égal au demi-angle au sommet de la première surface inclinée 18. Et le deuxième côté 23 présente une forme tronconique de révolution autour de l'axe de rotation X qui présente un demi-angle au sommet égal au deuxième demi-angle au sommet de la deuxième surface inclinée 19. Ainsi, les éléments de serrage 15 coopèrent plus aisément avec les surfaces d'appui 18, 19 de sorte à se déplacer radialement vers l'extérieur de manière linéaire sans nécessite d'efforts excessifs.

La surface formée au niveau de la grande base 21 des éléments de serrage 15 comporte une rainure 24, visible en figure 3, et qui permet de loger une bague élastique 25 de forme annulaire. La bague élastique 25, représentée en figure 2, permet de raccorder les uns aux autres les éléments de serrage 15 tout en les maintenant autour de la vis filetée 6. De plus, la bague élastique 25 permet d'exercer un effort de rappel radial orienté en direction de la tige filetée 7 sur les éléments de serrage 15 de sorte à repositionner les éléments de serrage 15 à proximité de la tige filetée 7 lorsque le dispositif de serrage 1 est desserré.

Concernant le palier à roulement 16, celui-ci est illustré plus en détail en référence à la figure 4. En effet, le palier à roulement 16 comporte ici une bague supérieure 26, une bague inférieure 27, et des corps roulants 17 réalisés sous la forme d'aiguille qui sont interposés entre la bague supérieure 26 et la bague inférieure 27. Les aiguilles 17 peuvent être maintenus les uns aux autres à l'aide d'une cage. Les aiguilles 17 sont réalisées sous la forme de cylindre dont l'axe de révolution est orienté selon la direction radiale du dispositif de serrage 1. La bague supérieure 26 est située contre l'élément d'actionnement 9 tandis que la bague inférieure 27 repose contre la collerette 13. Dans un autre mode de réalisation, le palier à roulement 16 peut également être réalisé sous la forme d'une cage à aiguilles, c'est-à-dire qu'ici le palier à roulement 16 ne présente pas de bague, les aiguilles 17 étant d'une part en contact avec l'élément d'actionnement 9 et d'autre part en contact avec la collerette 13.

L'élément d'actionnement 9 est, dans l'exemple représenté en figure 2, formé d'une portion annulaire plane 28 traversée par le trou taraudé 10 et surmontée d'un chapeau 29 configuré pour coopérer avec un outil de serrage. L'élément d'actionnement 9 présente également une jupe périphérique 30 réalisée tout autour de la portion annulaire plane 28. La surface externe de la jupe périphérique 30 peut être avantageusement rugueuse de sorte à faciliter le serrage qui peut être réalisé dans un premier temps manuellement. L'élément d'actionnement 9 comporte également une protubérance 31 faisant saillie de la portion annulaire plane 28 vers l'intérieur du dispositif de serrage 1.

Le palier à roulement 16 est maintenu radialement, d'une part, à l'intérieur par la protubérance 31 de l'élément d'actionnement et, d'autre part, à l'extérieur, par une butée radiale 32 faisant saillie de la collerette 13 vers l'extérieur du dispositif de serrage 1. La butée radiale 32 présente une forme annulaire, est située tout autour du palier à roulement 16 et coopère avec la jupe périphérique 30 de sorte à former un joint d'étanchéité 33. En effet, la jupe périphérique 30 présente la forme d'un crochet coopérant avec un contre crochet formé par la butée radiale 32 de sorte à empêcher des éléments externes tels que la poussière d'entrer dans le dispositif de serrage 1.

Un procédé d'utilisation d'un tel dispositif de serrage 1 pour le serrage d'une deuxième pièce 4 sur une première pièce 2 est décrit ci-dessous.

La première pièce 2 est tout d'abord placée contre la deuxième pièce 4 de sorte que le premier orifice 3 et le deuxième orifice 5 soient coaxiaux. Le dispositif de serrage 1 est alors introduit dans les orifices 3, 5 jusqu'à ce que la collerette 13 soit disposée contre les bords 14 du premier orifice 3, les éléments de serrage 15 et la tête de vis 8 étant ainsi positionnés dans le deuxième orifice 5.

L'élément d'actionnement 9 est ensuite actionné manuellement ou à l'aide d'un outil de serrage engagé sur le chapeau 29 de sorte à venir visser la tige filetée 7 dans le trou taraudé 10. Le vissage entraine la remontée de la tête de vis 8 en direction du manchon 11. Les éléments de serrage 15 sont ainsi pris en tenaille entre les surfaces d'appui 18, 19 de la tête de vis 8 et du manchon 11 de sorte à être déplacés radialement vers l'extérieur. La surface formée par la grande base 21 des éléments de serrage 15 vient alors exercer des efforts contre les parois du deuxième orifice 5 orientés selon un angle de 45° par rapport à la direction radiale.

Les efforts exercés par les éléments de serrage 15 présentent ainsi deux composantes, l'une radiale permettant d'exercer un effort de serrage contre les parois du deuxième orifice 5 de la deuxième pièce 4, l'autre axiale venant plaquer la collerette 13 contre la première pièce 2.

Afin de desserrer le dispositif de serrage 1, l'élément d'actionnement 9 est actionné de sorte à venir dévisser la tige filetée du trou taraudé 10. Le dévissage entraine sous l'effet de l'élasticité de la bague 25 le retour en position des éléments de serrage 15 qui n'exerce alors plus d'effort contre les parois du deuxième orifice 5 permettant alors au dispositif de serrage 1 d'être retiré.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Dispositif de serrage (1) destiné à serrer une première pièce (2) et une deuxième pièce (4) l'une contre l'autre, chacune des première et deuxième pièces (2, 4) présentant respectivement un premier orifice (3) et un deuxième orifice (5), le dispositif étant destiné à être inséré dans le premier et le deuxième orifices (3, 5), le dispositif de serrage (1) comprenant :
- une vis filetée (6) s'étendant selon un axe de rotation (X) et comportant une tige filetée (7) destinée à traverser le premier orifice (3) et une tête de vis (8) formée à une première extrémité de la tige filetée (7), la tête de vis (8) ayant une première surface d'appui (18) inclinée et étant destinée à être logée dans le deuxième orifice (5),
- un élément d'actionnement (9) comportant un trou taraudé (10) dans lequel est vissé une deuxième extrémité de la tige filetée (7),
- un manchon (11) emmanché et monté libre en rotation autour de la vis filetée (6) entre la tête de vis (8) et l'élément d'actionnement (9), le manchon (11) comportant un corps cylindrique (12) et une collerette (13) s'étendant radialement depuis le corps cylindrique (12) et destinée à reposer contre des bords du premier orifice (3), le corps cylindrique (12) comportant une deuxième surface d'appui (19) inclinée,
- au moins un élément de serrage (15) disposé autour de la vis filetée (6) entre la première surface d'appui (18) inclinée et la deuxième surface d'appui (19) inclinée, l'au moins un élément de serrage (15) étant configuré pour se déplacer radialement en s'éloignant de la tige filetée (7) lors du rapprochement de la première surface d'appui (18) inclinée vers la deuxième surface d'appui (19) inclinée, et
- un palier à roulement (16) engagé autour de la vis et comportant des corps roulants (17) interposés entre la collerette (13) et l'élément d'actionnement (9).

2. Dispositif de serrage (1) selon la revendication 1, dans lequel les corps roulants (17) sont des aiguilles ayant un axe de révolution s'étendant dans une direction radiale.

3. Dispositif de serrage (1) selon la revendication 1 ou la revendication 2, dans lequel la collerette (13) est réalisée à une première extrémité du corps cylindrique (12) et le corps cylindrique (12) comporte une deuxième extrémité, la deuxième extrémité étant pourvue de la deuxième surface d'appui (19) inclinée.

4. Dispositif de serrage (1) selon l'une des revendications 1 à 3, dans lequel l'élément de serrage (15) présente une section radiale trapézoïdale comportant une petite base (20) située en vis à vis de la tige filetée (7), une grande base (21), un premier côté (22) et un deuxième côté (23), le premier côté et le deuxième côté reliant la grande base à la petite base, le premier côté étant en vis-à-vis de la première surface d'appui (18) inclinée et le deuxième côté étant en vis-vis de la deuxième surface d'appui (19) inclinée.

5. Dispositif de serrage (1) selon l'une des revendications 1 à 4, dans lequel la première surface d'appui (18) inclinée et la deuxième surface d'appui (19) inclinée présentent une forme tronconique de révolution autour de l'axe de rotation (X) et présentent respectivement un premier demi-angle au sommet (34) et un deuxième demi-angle au sommet (35), le premier demi-angle au sommet (34) et le deuxième demi-angle au sommet (35) étant chacun compris entre 30 et 60°.

6. Dispositif de serrage (1) selon les revendications 4 et 5 prises en combinaison, dans lequel le premier côté (22) présente une forme tronconique de révolution autour de l'axe de rotation (X) qui présente un demi-angle au sommet égal au premier demi-angle au sommet de la première surface d'appui (18) inclinée.

7. Dispositif de serrage (1) selon la revendication 6 ou les revendications 4 et 5 prises en combinaison, dans lequel le deuxième côté (23) présente une forme tronconique de révolution autour de l'axe de rotation (X) qui présente un demi-angle au sommet égal au deuxième demi-angle au sommet de la deuxième surface d'appui (19) inclinée.

8. Dispositif de serrage (1) selon l'une des revendications 5 à 7, dans le premier demi-angle au sommet est égal au deuxième demi-angle au sommet.

9. Dispositif de serrage (1) selon l'une des revendications 1 à 8, dans lequel l'au moins un élément de serrage (15) est réalisé dans un matériau métallique.

10. Dispositif de serrage (1) selon la revendication 9, dans lequel l'au moins un élément de serrage (15) est réalisé en acier trempé ou en acier inoxydable.

11. Dispositif de serrage (1) selon l'une des revendications 1 à 10, dans lequel le dispositif de serrage (1) comporte au moins deux éléments de serrage (15), répartis dans un plan normal à l'axe de rotation (X) et disposées autour de la vis filetée (6).

12. Dispositif de serrage (1) selon la revendication 11, dans lequel les éléments de serrage (15) sont raccordés les uns aux autres à l'aide d'une bague élastique (25) disposée autour desdits éléments de serrage (15), la bague élastique (25) exerçant un effort de rappel radial orienté en direction de la tige filetée (7) sur les éléments de serrage (15).

13. Dispositif de serrage (1) selon l'une des revendications 1 à 12, dans lequel le palier à roulement (16) comporte une bague supérieure (26) située contre l'élément d'actionnement (9) et une bague inférieure (27) reposant contre la collerette (13), les corps roulants (17) étant interposés entre la bague supérieure (26) et la bague inférieure (27).

14. Ensemble de serrage comportant une première pièce (2), une deuxième pièce (4) présentant respectivement un premier orifice (3) et un deuxième orifice (5) et un dispositif de serrage (1) selon l'une des revendications 1 à 13, le dispositif de serrage (1) étant inséré dans le premier orifice (3) et le deuxième orifice (5) et étant configuré pour serrer la première pièce (2) et la deuxième pièce (4) l'une contre l'autre, la tige filetée (7) traversant le premier orifice (3), la tête de vis (8) et l'au moins un élément de serrage (15) étant logés dans le deuxième orifice (5).

15. Procédé de serrage d'une première pièce (2) munie d'un premier orifice (3), dans lequel le procédé comprend les étapes suivantes :
- fournir une deuxième pièce (4) munie d'un deuxième orifice (5) et un dispositif de serrage (1) selon l'une des revendications 1 à 13,
- disposer la première pièce (2) sur la deuxième pièce (4) de sorte que le premier orifice (3) et le deuxième orifice (5) soit alignée,
- insérer le dispositif de serrage (1) dans le premier orifice (3) et dans le deuxième orifice (5) de sorte que la collerette (13) repose contre des bords du premier orifice (3) et que la tête de vis (8) et l'au moins un élément de serrage (15) soient situés dans le deuxième orifice (5),
- actionner l'élément d'actionnement (9) de sorte à rapprocher la première surface d'appui (18) inclinée vers la deuxième surface d'appui (19) inclinée provoquant le déplacement radial de l'élément de serrage (15) contre des parois du deuxième orifice (5). !

## Patentansprüche

1. Spannvorrichtung (1), dazu bestimmt, ein erstes Teil (2) und ein zweites Teil (4) gegeneinander zu pressen, diese ersten und zweiten Teile (2, 4) weisen jeweils eine erste Öffnung (3) und eine zweite Öffnung (5) auf, die Vorrichtung ist dabei dazu bestimmt, in die erste und zweite Öffnung (3, 5) eingesetzt zu werden, dabei umfasst die Spannvorrichtung (1):
- eine Gewindespindel (6), die entlang einer Drehachse (X) verläuft und eine Gewindestange (7) enthält, vorgesehen durch die erste Öffnung (3) hindurchzuführen, sowie einen Schraubenkopf (8), gebildet an einem ersten Ende der Gewindestange (7), der Schraubenkopf (8) weist dabei eine erste geneigte Auflagefläche (18) auf, die dazu bestimmt ist, in der zweiten Öffnung (5) untergebracht zu werden,
- ein Betätigungselement (9), mit einem Gewindeloch (10), in das ein zweites Endstück der Gewindestange (7) eingeschraubt ist,
- eine Hülse (11), eingepresst und um die Gewindespindel (6) frei drehbar montiert zwischen dem Schraubenkopf (8) und dem Betätigungselement (9), die Hülse (11) enthält dabei einen zylinderförmigen Körper (12) und einen Hals (13), der radial vom zylinderförmigen Körper (12) aus verläuft und auf den Rändern der ersten Öffnung (3) aufliegt, der zylinderförmige Körper (12) enthält dabei eine zweite geneigte Auflagefläche (19),
- mindestens ein Spannelement (15), angeordnet um die Gewindespindel (6) herum, zwischen der ersten geneigten Auflagefläche (18) und der zweiten geneigten Auflagefläche (19), das mindestens eine Spannelement (15) ist dabei dazu konfiguriert, sich radial zu verschieben, indem es sich von der Gewindestange (7) bei einer Annäherung der ersten geneigten Auflagefläche (18) zur zweiten geneigten Auflagefläche (19) hin entfernt, und
- ein Wälzlager (16) befindlich um die Schraube herum und Rollkörper (17) enthaltend, die zwischen dem Hals (13) und dem Betätigungselement (9) eingelegt sind.

2. Spannvorrichtung (1) nach Anspruch 1, bei der die Rollkörper (17) Nadeln sind, mit einer Drehachse, die in radialer Richtung verläuft.

3. Spannvorrichtung (1) nach Anspruch 1 oder Anspruch 2, bei der der Hals (13) an einem ersten Endstück des zylinderförmigen Körpers (12) ausgeführt ist oder der zylinderförmige Körper (12) ein zweites Endstück enthält, das zweite Endstück ist dabei mit der zweiten geneigten Auflagefläche (19) ausgestattet.

4. Spannvorrichtung (1) nach einem der Ansprüche 1 bis 3, bei der das Spannelement (15) einen radialen trapezförmigen Querschnitt aufweist, mit einer kleinen Basis (20), angeordnet gegenüber der Gewindestange (7), einer großen Basis (21), einer ersten Seite (22) und einer zweiten Seite (23), die erste Seite und die zweite Seite verbinden die große Basis mit der kleinen Basis, die erste Seite befindet sich gegenüber der ersten geneigten Auflagefläche (18) und die zweite Seite befindet sich gegenüber der zweiten geneigten Auflagefläche (19).

5. Spannvorrichtung (1) nach einem der Ansprüche 1 bis 4, bei der die erste geneigte Auflagefläche (18) und die zweite geneigte Auflagefläche (19) eine kegelstumpfförmige Form der Drehung um die Drehachse (X) herum aufweisen und jeweils einen ersten halben Scheitelwinkel (34) und einen zweiten halben Scheitelwinkel (35) aufweisen, der erste halbe Scheitelwinkel (34) und der zweite halben Scheitelwinkel (35) liegen jeweils zwischen 30 und 60°.

6. Spannvorrichtung (1) nach den Ansprüchen 4 und 5 kombiniert gesehen, bei der die erste Seite (22) eine kegelstumpfförmige Form der Drehung um die Drehachse (X) herum aufweist, die einen halben Scheitelwinkel gleich dem ersten halben Scheitelwinkel der ersten geneigt Auflagefläche (18) aufweist.

7. Spannvorrichtung (1) nach Anspruch 6 oder den Ansprüchen 4 und 5 kombiniert gesehen, bei der die zweite Seite (23) eine kegelstumpfförmige Form der Drehung um die Drehachse (X) herum aufweist, die einen halben Scheitelwinkel gleich dem zweiten halben Scheitelwinkel der zweiten geneigten Auflagefläche (19) aufweisen.

8. Spannvorrichtung (1) nach einem der Ansprüche 5 bis 7, bei der der erste halbe Scheitelwinkel gleich dem zweiten halben Scheitelwinkel ist.

9. Spannvorrichtung (1) nach einem der Ansprüche 1 bis 8, bei der das mindestens eine Spannelement (15) aus einem metallischen Material hergestellt wird.

10. Spannvorrichtung (1) nach Anspruch 9, bei der das mindestens eine Spannelement (15) aus gehärtetem Stahl oder aus Edelstahl hergestellt wird.

11. Spannvorrichtung (1) nach einem der Ansprüche 1 bis 10, bei der die Spannvorrichtung (1) mindestens zwei Spannelemente (15) enthält, die in einer Ebene senkrecht zur Drehachse (X) verteilt und um die Gewindespindel (6) angeordnet sind.

12. Spannvorrichtung (1) nach Anspruch 11, bei der die Spannelemente (15) miteinander mittels eines elastischen Rings (25) verbunden sind, der um diese Spannelemente (15) herum angeordnet ist, der elastische Ring (25) übt dabei eine radiale Rückstellkraft, orientiert in Richtung der Gewindestange (7), auf die Spannelemente (15) aus.

13. Spannvorrichtung (1) nach einem der Ansprüche 1 bis 12, bei der das Wälzlager (16) einen oberen Ring (26) enthält, der am Betätigungselement (9) anliegt sowie einen unteren Ring (27), der auf dem Hals (13) ruht, die Rollkörper (17) sind zwischen dem oberen Ring (26) und dem unteren Ring (27) eingelegt.

14. Spanneinheit, mit einem ersten Teil (2), einem zweiten Teil (4), mit jeweils einer ersten Öffnung (3) und einer zweiten Öffnung (5) sowie einer Spannvorrichtung (1) nach einem der Ansprüche 1 bis 13, die Spannvorrichtung (1) wird in die erste Öffnung (3) und die zweite Öffnung (5) eingesetzt und ist dazu konfiguriert, das erste Teil (2) und das zweite Teil (4) gegeneinander zu pressen, die Gewindestange (7) führt durch die Öffnung (3) hindurch, der Schraubenkopf (8) und das mindestens eine Spannelement (15) sind dabei in der zweiten Öffnung (5) untergebracht.

15. Spannverfahren eines ersten Teils (2) versehen mit einer ersten Öffnung (3), bei der das Verfahren die folgenden Schritte umfasst:
- Bereitstellung eines zweiten Teils (4), versehen mit einer zweiten Öffnung (5) und einer Spannvorrichtung (1) nach einem der Ansprüche 1 bis 13,
- Anordnung des ersten Teils (2) auf dem zweiten Teil (4), so dass die erste Öffnung (3) und die zweite Öffnung (5) aneinander ausgerichtet sind,
- Einführen der Spannvorrichtung (1) in der ersten Öffnung (3) und in die zweite Öffnung (5), so dass der Hals (13) an den Rändern der ersten Öffnung (3) anliegt und dass der Schraubenkopf (8) sowie das mindestens eine Spannelement (15) sich in der zweiten Öffnung (5) befinden,
- Betätigung des Betätigungselementes (9) so dass sich die erste geneigte Auflagefläche (18) der zweiten geneigten Auflagefläche (19) nähert, was zur radialen Verschiebung dieses Spannelementes (15) gegen die Wände der zweiten Öffnung führt. (5)

## Claims

1. A clamping device (1) for clamping a first part (2) and a second part (4) together, each of the first and second parts (2, 4) having a first hole (3) and a second hole (5) respectively, the device being designed for insertion into the first and second holes (3, 5), with the clamping device comprising:
- a threaded screw (6) extending along an axis of rotation (X) and comprising a threaded shank (7) intended to pass through the first hole (3) and a screw head (8) formed at a first end of the threaded shank (7), the screw head (8) having a first inclined bearing surface (18) and being intended to be housed in the second hole (5),
- an actuator (9) comprising a threaded hole (10) into which a second end of the threaded rod (7) is screwed,
- a tight-fitting sleeve (11) and which is free to rotate about the threaded screw (6) between the screw head (8) and the actuator (9), the sleeve (11) comprising a cylindrical body (12) and a collar (13) extending radially from the cylindrical body (12) and intended to rest against edges of the first hole (3), with the cylindrical body (12) comprising a second inclined bearing surface (19),
- at least one clamping part (15) arranged around the threaded screw (6) between the first inclined bearing surface (18) and the second inclined bearing surface (19) , the at least one clamping part (15) being configured to move radially away from the threaded rod (7) as the first inclined bearing surface (18) moves towards the second inclined bearing surface (19), and
- a roller bearing (16) engaged around the screw and comprising rolling elements (17) interposed between the collar (13) and the actuator (9).

2. A clamping device (1) according to claim 1, wherein the rolling elements (17) are needles having an axis of revolution extending in a radial direction.

3. A clamping device (1) according to claim 1 or claim 2, wherein the collar (13) is provided at a first end of the cylindrical body (12) and the cylindrical body (12) has a second end, the second end being provided with the second inclined bearing surface (19).

4. A clamping device (1) according to one of claims 1 to 3, in which the clamping part (15) has a trapezoidal radial cross-section comprising a small base (20) facing the threaded rod (7), a large base (21), a first side (22) and a second side (23), the first side and the second side connecting the large base to the small base, the first side facing the
first inclined bearing surface (18) and the second side facing the second inclined bearing surface (19).

5. A clamping device (1) according to one of claims 1 to 4 in which the first inclined bearing surface (18) and the second inclined bearing surface (19) have a truncated cone shape of revolution about the axis of rotation (X) and respectively have a first half-angle at the apex (34) and a second half-angle at the apex (35), the first half-angle at the apex (34) and the second half-angle at the apex (35) each being included between 30 and 60°.

6. A clamping device (1) according to one of claims 4 and 5 combined together, in which the first side (22) has a truncated cone shape revolving about the axis of rotation (X) which has a half-angle at the apex equal to the first half-angle at the apex of the first inclined bearing surface (18).

7. A clamping device (1) according to claim 6 or to claim 4 and 5 combined together, in which the second side (23) has a truncated cone shape revolving about the axis of rotation (X) which has a half-angle at the apex equal to the second half-angle at the apex of the second inclined bearing surface (19).

8. A clamping device (1) according to one of claims 5 to 7, in which the first half-angle at the apex equals the second half-angle at the apex.

9. A clamping device (1) according to one of claims 1 to 8, in which the at least one clamping element (15) is made of a metallic material.

10. A clamping device (1) according to claim 9 in which the at least one clamping device is made of hardened steel or stainless steel.

11. A clamping device (1) according to one of claims 1 to 10 in which the clamping device (1) comprises at least two clamping parts (15), set out in a plane at right angles to the axis of rotation (X) and that are set out around the threaded screw (6).

12. A clamping device (1) according to claim 11 in which the clamping parts (15) are connected to one another by an elastic ring (25) arranged around said clamping parts (15) and with the elastic ring (25) exerting a radial return force directed towards the threaded rod (7) on the clamping parts (15).

13. A clamping device (1) according to one of claims 1 to 12, wherein the rolling bearing (16) comprises a top race (26) located against the actuating element (9) and a bottom race (27) resting against the
collar (13), the rolling elements (17) being interposed between the top race (26) and the bottom race (27).

14. A clamping device comprising a first part (2), a second part (4) having a first hole and a second hole (3) and a second hole (5) and a clamping device (1) according to claims 1 to 13, the clamping device (1) being inserted into the first hole (3) and the second hole (5) and being set up to clamp the first part (2) and the second part (4) together, the threaded rod (7) passing through the first hole (3), the screw head (8) and the at least one clamping part (15) being housed in the second hole (5).

15. A method of clamping a first part (2) provided with a first hole (3), wherein the method comprises the following steps:
- providing a second part (4) with a second hole (5) and a clamping device (1) according to one of claims 1 to 13,
- arranging the first part (2) on the second part (4) so that the first hole (3) and the second hole (5) are aligned,
- inserting the clamping device (1) into the first hole and into the second hole (5) so that the collar (13) rests against the edges of the first hole (3) and the screw head (8) and the at least one clamping part (15) are located in the second hole (5),
- operating the actuator (9) to bring the first inclined bearing surface (18) towards the second inclined bearing surface (19) causing the radial movement of the clamping part (15) against the walls of the second hole (5).
